# FASCICULE DE BREVET EUROPEEN

(11) **EP 4 070 086 B1**
(45) Date de publication et mention de la délivrance du brevet: **13.03.2024**
(21) Numéro de dépôt: 20824307.1
(22) Date de dépôt: 26.11.2020
(51) Int. Cl.: G01N 23/20008

(54) **DISPOSITIF ET PROCÉDÉ DE MESURE DES ANGLES D'ORIENTATION D'UN SYSTÈME D'IMAGERIE X**
VORRICHTUNG UND VERFAHREN ZUM MESSEN VON AUSRICHTUNGSWINKELN EINES RÖNTGENBILDSYSTEMS
DEVICE AND METHOD FOR MEASURING ANGLES OF ORIENTATION OF AN X-RAY IMAGING SYSTEM

(30) Priorité: 02.12.2019 FR 1913620
(43) Date de publication de la demande: 12.10.2022
(73) Titulaire: SAFRAN, 75015 Paris (FR); Association pour la Recherche et le Développement des Méthodes et Processus Industriels, 75006 Paris (FR)
(72) Inventeur: ROMERO, Edward, 77550 Moissy-Cramayel (FR); ARNAUD, Alexiane, 77550 Moissy-Cramayel (FR); REMACHA, Clément, 77550 Moissy-Cramayel (FR); PROUDHON, Henry, 77930 Perthes (FR)
(74) Mandataire: Brevalex
(86) Numéro de dépôt international: PCT/FR2020/052186
(87) Numéro de publication internationale: WO 2021/111064

(56) Documents cités:
- US-A1- 2010 124 315
- US-A1- 2017 343 490
- US-A1- 2019 302 039
- CHENGLU ZHANG ET AL: "Alignment of sample position and rotation during in situ synchrotron X-ray micro-diffraction experiments using a Laue cross-correlation approach", JOURNAL OF APPLIED CRYSTALLOGRAPHY, vol. 52, no. 5, 20 septembre 2019 (2019-09-20), pages 1119-1127, XP055743368, DOI: 10.1107/S1600576719010562
- MICHAEL L. HART ET AL: "Complete elliptical ring geometry provides energy and instrument calibration for synchrotron-based two-dimensional X-ray diffraction", JOURNAL OF APPLIED CRYSTALLOGRAPHY., vol. 46, no. 5, 18 septembre 2013 (2013-09-18), pages 1249-1260, XP055744789, DK ISSN: 0021-8898, DOI: 10.1107/S0021889813022437
- A. P. HAMMERSLEY ET AL: "Two-dimensional detector software: From real detector to idealised image or two-theta scan", HIGH PRESSURE RESEARCH, vol. 14, no. 4-6, avril 1996 (1996-04), pages 235-248, XP055362474, US ISSN: 0895-7959, DOI: 10.1080/08957959608201408

## Description

### DOMAINE TECHNIQUE

L'invention se situe dans le domaine de l'imagerie par rayonnement X et, plus précisément, dans le domaine de l'alignement des éléments optiques d'un système d'imagerie par rayonnement X. Elle concerne un dispositif et un procédé de mesure des angles d'orientation d'un système d'imagerie X comprenant une source de rayonnement X, un détecteur de rayonnement X et un porte-échantillon agencé pour recevoir un échantillon à analyser, le porte-échantillon étant placé entre la source de rayonnement X et le détecteur de rayonnement X.

L'invention s'applique notamment aux systèmes d'imagerie X utilisés pour le contrôle de pièces monocristallines par la méthode de Laue. Un tel système d'imagerie repose sur l'étude d'une figure de diffraction générée sur le capteur par la diffraction d'un faisceau X polychromatique lors de son passage au travers d'une pièce monocristalline. En particulier, la forme et la position des taches composant la figure de diffraction peuvent être comparées à celles d'un ensemble de figures de diffraction de référence, de manière à déterminer l'orientation cristalline de la pièce monocristalline. Néanmoins, l'invention s'applique à tout système d'imagerie X comprenant une source de rayonnement X et un détecteur de rayonnement X dont on souhaite déterminer l'alignement par rapport à un échantillon à imager.

### ÉTAT DE LA TECHNIQUE ANTÉRIEURE

Dans tout système d'imagerie par rayonnement X, l'alignement correct de ses différents éléments optiques est nécessaire pour l'obtention d'une résolution d'image souhaitée. À tout le moins, l'orientation des éléments optiques par rapport à l'axe optique du système doit être connue avec une précision suffisante pour permettre une reconstruction de l'image avec la résolution souhaitée. La plupart des techniques permettant de déterminer l'alignement d'un système d'imagerie X nécessitent l'utilisation d'équipements dédiés, rendus inutiles pendant la phase opérationnelle d'acquisition d'images. À titre d'exemple, des systèmes à pointeur laser peuvent être utilisés, comme décrit dans B. Fay, J. Trotel and A. Frichet, Optical alignment for submicrons x-ray lithography, Jounral of Vacuum Science and Technology.

Les systèmes d'alignement peuvent aussi reposer sur l'utilisation de fantômes conçus spécialement pour cette tâche. Un fantôme est placé sur le chemin du faisceau X, entre la source de rayonnement et le détecteur. Dans la mesure où les dimensions et les propriétés d'absorption du fantôme sont connues, l'image générée par le détecteur permet de connaître la position relative de la source de rayonnement, du fantôme et du détecteur. Le principal inconvénient de cette technique est que l'alignement du système d'imagerie est déterminé avec une précision limitée par la résolution spatiale du détecteur.

Le brevet US 6,453,006 B1 décrit des technique d'étalonnage et d'alignement d'un système de réflectrométrie à rayons X comprenant une source de rayonnement X, un réflecteur, un échantillon à tester et un détecteur. Il décrit notamment un procédé d'alignement du réflecteur avec la source de rayonnement X consistant à disposer un fil fin entre ces éléments pour générer une ombre et à orienter le réflecteur de sorte à obtenir la plus faible largeur d'ombre possible. Là encore, la précision de l'alignement est limitée par la résolution spatiale du détecteur.

CHENGLU ZHANG ET AL: "Alignment of sample position and rotation during in situ synchrotron X-ray micro-diffraction experiments using a Laue cross-correlation approach", JOURNAL OF APPLIED CRYSTALLOGRAPHY, vol. 52, no. 5, 20 septembre 2019 (2019-09-20), pages 1119-1127, XP055743368, DOI: 10.1107/S1600576719010562, divulgue qu'un faisceau X polychromatique est dirigé vers un échantillon et une image de diffraction est enregistrée. Cette image est comparée avec une autre image du même échantillon pour y dériver une déformation, déplacement ou une rotation de l'échantillon.

Les solutions précitées pour aligner les éléments optiques d'un système d'imagerie X ne donnent donc pas entière satisfaction. Un premier but de l'invention est de proposer une technique pour permettre l'alignement d'un système d'imagerie X ne nécessitant qu'un nombre limité d'éléments optiques en plus de ceux utiles pour la phase de mesure d'un échantillon. Un deuxième but de l'invention est de proposer une technique permettant d'obtenir une meilleure précision de l'alignement, en particulier supérieure à la résolution du détecteur X du système d'imagerie.

### EXPOSÉ DE L'INVENTION

À cet effet, l'invention repose sur l'utilisation de la méthode de Laue. Cette méthode est utilisée non pas pour étudier la structure cristalline d'un échantillon, mais pour déterminer l'orientation des éléments optiques d'un système d'imagerie X à l'aide d'un échantillon de référence dont la structure cristalline et l'orientation sont connues. Le procédé selon l'invention comprend l'installation de l'échantillon de référence sur un porte-échantillon, l'émission d'un faisceau X traversant l'échantillon de référence et formant une figure de diffraction sur un détecteur du système d'imagerie X, la génération d'une image comprenant la figure de diffraction, et la détermination de l'orientation du faisceau X et de celle du détecteur par comparaison de la figure de diffraction obtenue avec au moins une image cible comportant une figure de diffraction correspondant à des orientations connues du faisceau X et du détecteur.

Plus précisément, l'invention a pour objet un procédé de mesure des angles d'orientation d'un système d'imagerie X, le système d'imagerie X comprenant une source de rayonnement X, un détecteur de rayonnement X et un porte-échantillon agencé pour recevoir un échantillon à analyser. Le système d'imagerie X est agencé de sorte que la source de rayonnement X puisse émettre un faisceau X polychromatique selon un axe principal de propagation passant par l'échantillon à analyser et atteignant une surface sensible du détecteur de rayonnement X. Un axe optique du système d'imagerie X est défini entre un centre d'émission de la source de rayonnement X et le détecteur de rayonnement X. Le procédé comprend les étapes de :
- émettre, depuis la source de rayonnement X, un faisceau X polychromatique selon l'axe principal de propagation, de sorte que le faisceau X traverse un échantillon de référence installé sur le porte-échantillon et forme une figure de diffraction sur la surface sensible du détecteur de rayonnement X,
- générer, avec le détecteur de rayonnement X, une image observée, l'image observée comprenant la figure de diffraction, et
- déterminer l'orientation de l'axe principal de propagation et l'orientation de la surface sensible du détecteur de rayonnement X par comparaison de l'image observée avec au moins une image cible, l'image cible comportant une figure de diffraction obtenue pour l'échantillon de référence avec une orientation prédéterminée de l'axe principal de propagation et une orientation prédéterminée de la surface sensible du détecteur de rayonnement X.

Chaque figure de diffraction est formée par un ensemble de taches lumineuses dont la forme, les dimensions et la position dans un plan donné dépendent de l'orientation de l'axe principal de propagation de la source de rayonnement X, de l'orientation de la surface sensible du détecteur de rayonnement X et des propriétés de diffraction de l'échantillon de référence.

L'axe optique du système d'imagerie X est noté *X.* Il définit, avec un deuxième axe, noté *Y,* et un troisième axe, noté Z, un repère orthogonal direct *XYZ.* Le plan passant par les axes *X* et *Y* est noté « plan *XY* » ; le plan passant par les axes *X* et *Z* est appelé « plan *XZ* » ; et le plan passant par les axes *Y* et *Z* est appelé « plan *YZ* ». En plus de passer par le centre d'émission de la source de rayonnement X, l'axe optique X peut passer par le centre du détecteur de rayonnement X ou à proximité de ce point.

La source de rayonnement X émet typiquement un faisceau X de forme conique selon un axe principal de propagation *Xₛ*, le centre d'émission de la source de rayonnement X correspondant au sommet du cône et l'axe principal de propagation *Xₛ* correspondant à l'axe du cône. L'axe principal de propagation *Xₛ* forme un angle ξ_{xy} avec l'axe optique *X* dans le plan *XY,* c'est-à-dire par rotation autour de l'axe *Z,* et un angle ξ_{xz} avec l'axe optique *X* dans le plan XZ, c'est-à-dire par rotation autour de l'axe *Y.*

Le détecteur de rayonnement X peut comprendre un ensemble d'éléments sensibles disposés dans un plan *Y_{d}Z_{d}* sensiblement orthogonal à l'axe optique X. L'orientation du détecteur de rayonnement X est définie dans un repère orthogonal direct *X_{d}Y_{d}Z_{d}.* Le repère *X_{d}Y_{d}Z_{d}* forme, par rapport au repère *XYZ,* un angle α par rotation autour de l'axe Z, un angle β par rotation autour de l'axe *Y* et un angle γ par rotation autour de l'axe *X.* Il est à noter que le détecteur de rayonnement X pourrait également comprendre un ensemble d'éléments sensibles disposés linéairement selon un axe *Y_{d}* ou *Z_{d}* et déplacé linéairement selon un axe orthogonal *Z_{d}* ou *Y_{d}*, respectivement, afin de reconstituer le plan *Y_{d}Z_{d}.*

Selon une première forme de réalisation, l'étape de déterminer l'orientation de l'axe principal de propagation *Xₛ*, et l'orientation de la surface sensible du détecteur de rayonnement X comprend une comparaison de l'image observée avec un ensemble d'images cibles, chaque image cible représentant une figure de diffraction pour une orientation prédéterminée de l'axe principal de propagation et une orientation prédéterminée de la surface sensible du détecteur de rayonnement X, lesdites orientations étant distinctes pour chaque image cible.

L'orientation de l'axe principal de propagation *Xₛ* et celle de la surface sensible du détecteur de rayonnement X peuvent notamment correspondre aux orientations respectives pour l'image cible dont la figure de diffraction est la plus similaire de la figure de diffraction de l'image observée. Le critère de similitude entre la figure de diffraction de l'image cible et la figure de diffraction de l'image observée comprend par exemple une distance moyenne entre chaque tache dans l'image observée et la tache correspondante dans l'image cible.

Selon une deuxième forme de réalisation, l'étape de déterminer l'orientation de l'axe principal de propagation et l'orientation de la surface sensible du détecteur de rayonnement X comprend les sous-étapes de :
- déterminer un paramètre de similitude représentatif d'un degré de similitude entre la figure de diffraction de l'image observée et la figure de diffraction d'une image cible courante pour une orientation donnée de l'axe principal de propagation *Xₛ* et une orientation donnée de la surface sensible du détecteur de rayonnement X,
- comparer le paramètre de similitude avec un seuil de similitude,
- lorsque le paramètre de similitude est inférieur au seuil de similitude, identifier l'orientation donnée de l'axe principal de propagation *Xₛ* et l'orientation donnée de la surface sensible du détecteur de rayonnement X comme orientations effectives de l'axe principal de propagation *Xₛ* et de la surface sensible du détecteur de rayonnement X,
- lorsque le paramètre de similitude est supérieur ou égal au seuil de similitude, générer une nouvelle image cible courante, au moins l'une des orientations données pour l'image cible courante étant distincte de l'orientation donnée correspondante pour l'image cible précédente, et réitérer les sous-étapes précédentes jusqu'à ce que le paramètre de similitude soit inférieur au seuil de similitude

Chaque image cible peut être déterminée par une modélisation numérique de la diffraction générée par l'échantillon de référence installé sur le porte-échantillon, pour une orientation donnée de l'axe principal de propagation et une orientation donnée de la surface sensible du détecteur de rayonnement X. Un logiciel de modélisation de la diffraction de Laue peut être utilisé à cette fin. Le logiciel de modélisation de la diffraction de Laue est par exemple le logiciel PyMicro, développé par Henry Proudhon. Ce logiciel est basée sur des librairies pythons et VTK.

Le procédé de mesure des angles d'orientation d'un système d'imagerie X peut comprendre, en outre, préalablement à l'étape d'émission du faisceau X, une étape d'installation de l'échantillon de référence sur le porte-échantillon.

Le porte-échantillon peut comporter une surface support pour recevoir alternativement l'échantillon à analyser ou l'échantillon de référence. La surface support peut définir, par convention, un plan de référence. Ce plan de référence peut être le plan *XZ.*

L'échantillon de référence peut être formé dans un matériau monocristallin, par exemple un silicium monocristallin. Il est de préférence placé sur le porte-échantillon de sorte que l'un de ses plans cristallins soit parallèle au plan *YZ.*

L'invention a également pour objet un dispositif de mesure des angles d'orientation d'un système d'imagerie X, le système d'imagerie X comprenant une source de rayonnement X, un détecteur de rayonnement X et un porte-échantillon agencé pour recevoir un échantillon à analyser. Le système d'imagerie X est agencé de sorte que la source de rayonnement X puisse émettre un faisceau X polychromatique selon un axe principal de propagation passant par l'échantillon à analyser et atteignant une surface sensible du détecteur de rayonnement X. Un axe optique du système d'imagerie X est défini entre un centre de la source de rayonnement X et le détecteur de rayonnement X. Le dispositif comprend une unité de traitement configurée pour :
- faire émettre, par la source de rayonnement X, un faisceau X polychromatique selon l'axe principal de propagation, de sorte que le faisceau X traverse un échantillon de référence installé sur le porte-échantillon et forme une figure de diffraction sur la surface sensible du détecteur de rayonnement X,
- générer, avec le détecteur de rayonnement X, une image observée, l'image observée comprenant la figure de diffraction, et
- déterminer l'orientation de l'axe principal de propagation et l'orientation de la surface sensible du détecteur de rayonnement X par comparaison de l'image observée avec au moins une image cible, l'image cible comportant une figure de diffraction obtenue pour l'échantillon de référence avec une orientation prédéterminée de l'axe principal de propagation et une orientation prédéterminée de la surface sensible du détecteur de rayonnement X.

Le dispositif peut de plus comporter un premier diaphragme placé en amont du porte-échantillon, et agencé pour limiter une surface transversale du faisceau X. La surface transversale est définie dans le plan *YZ.* La limitation de la surface transversale permet d'assurer que l'ensemble du faisceau X atteignant le détecteur de rayonnement X ait bien traversé l'échantillon de référence. Ainsi, le premier diaphragme peut comporter une ouverture dont les dimensions dans le plan *YZ* sont inférieures aux dimensions correspondantes de l'échantillon de référence.

Le dispositif de mesure des angles d'orientation d'un système d'imagerie X peut comporter, en outre, un deuxième diaphragme et/ou un collimateur placé entre la source de rayonnement X et le premier diaphragme, agencé pour obtenir un faisceau X collimaté au niveau du porte-échantillon. Le deuxième diaphragme et/ou le collimateur présente notamment un intérêt lorsque la distance entre la source de rayonnement X et le détecteur de rayonnement X est supérieure ou égale à 30 cm.

Selon une forme particulière de réalisation, le dispositif comprend, en outre, un élément obturateur placé en aval du porte-échantillon, et agencé pour empêcher une partie du faisceau ayant traversé l'échantillon de référence sans être diffracté, d'atteindre la surface sensible du détecteur de rayonnement X. L'élément obturateur permet ainsi la formation, sur le détecteur de rayonnement X, d'une image ne comprenant que la figure de diffraction, et non la partie transmise du faisceau X. La plage d'intensité du faisceau X reçu est alors réduite en comparaison du cas où la partie transmise du faisceau X est également reçue par le détecteur. Il en résulte une plus grande dynamique des intensités observées des taches (pour l'échantillonnage), et donc une limitation du bruit électronique et une meilleure résolution de mesure de l'intensité de l'image.

L'élément obturateur est formé dans un matériau opaque aux rayons X. Il est par exemple en plomb.

En présence du premier diaphragme, l'élément obturateur présente de préférence des dimensions, dans le plan *YZ,* supérieures aux dimensions correspondantes de l'ouverture du premier diaphragme.

Le dispositif de mesure des angles d'orientation d'un système d'imagerie X peut comporter, en outre, l'échantillon de référence. Comme indiqué précédemment, l'échantillon de référence peut être formé dans un matériau monocristallin, par exemple un silicium monocristallin.

Les éléments optiques du dispositif de mesure des angles d'orientation d'un système d'imagerie X, à savoir le premier diaphragme, le deuxième diaphragme, le collimateur et/ou l'élément obturateur, peuvent être solidaires les uns des autres ou former des éléments séparés indépendants.

L'invention a enfin pour objet un programme d'ordinateur comprenant des instructions qui, lorsque le programme est exécuté par un ordinateur, conduisent celui-ci à mettre en oeuvre le procédé de mesure des angles d'orientation d'un système d'imagerie X tel que décrit précédemment.

### BRÈVE DESCRIPTION DES DESSINS

D'autres caractéristiques, détails et avantages de l'invention ressortiront à la lecture de la description qui va suivre, donnée uniquement à titre d'exemple et faite en référence aux dessins annexés pour lesquels :
- la figure 1 représente schématiquement un exemple de système d'imagerie X et de dispositif de mesure des angles d'orientation de ce système ;
- la figure 2 représente le repère orthogonal de référence et l'orientation de l'axe principal de propagation de la source de rayonnement X du système d'imagerie X par rapport à ce repère orthogonal ;
- la figure 3 représente le repère orthogonal de référence et l'orientation du repère orthogonal lié au détecteur de rayonnement X du système d'imagerie X par rapport à ce repère orthogonal ;
- la figure 4 représente un exemple de procédé de mesure des angles d'orientation du système d'imagerie X selon l'invention ;
- la figure 5 représente une forme particulière de réalisation d'une étape de détermination de l'orientation de l'axe principal de propagation de la source de rayonnement X et de l'orientation du repère orthogonal lié au détecteur de rayonnement X dans le procédé représenté sur la figure 4.

### DESCRIPTION DÉTAILLÉE

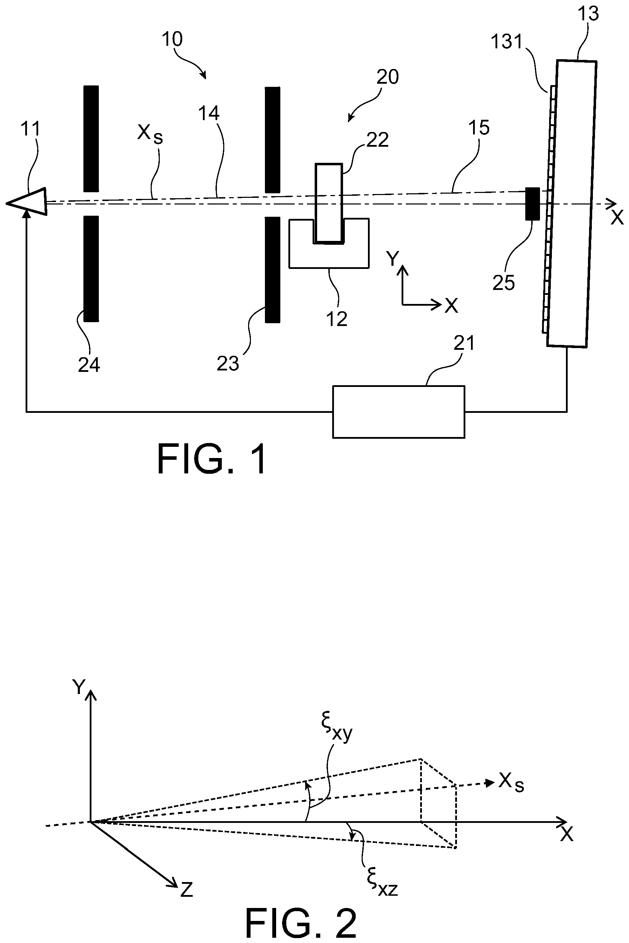

La figure 1 représente schématiquement un exemple de système d'imagerie X et de dispositif de mesure des angles d'orientation d'un système d'imagerie X selon l'invention. Le système d'imagerie X 10 comprend une source de rayonnement X 11, un porte-échantillon 12 et un détecteur de rayonnement X 13. La source X 11 est agencée pour émettre un faisceau X polychromatique 14 selon un axe principal de propagation *Xₛ*. Le faisceau X 14 présente une forme conique, le centre d'émission de la source 11 correspondant au sommet du cône et l'axe principal de propagation *Xₛ* correspondant à l'axe du cône. Le porte-échantillon 12 est positionné entre la source 11 et le détecteur 13. Il est agencé pour recevoir un échantillon à analyser par le système d'imagerie X et le maintenir dans une position lui permettant d'être traversé par le faisceau X 14. Des surfaces d'appui du porte-échantillon 12 forment des plans de référence définissant un repère orthogonal direct *XYZ* d'axes *X, Y* et Z. L'axe *X,* appelé « axe optique », passe par un centre d'émission de la source 11. Le détecteur de rayonnement X 13 est un détecteur plan. Il comprend une pluralité d'éléments sensibles au rayonnement X, les éléments sensibles étant disposés dans un plan *Y_{d}Z_{d}* sensiblement parallèle au plan *YZ* et formant une surface sensible 131.

La figure 2 représente le repère orthogonal *XYZ* lié au porte-échantillon 12 et l'axe principal de propagation *Xₛ* de la source de rayonnement X 11. L'axe principal de propagation *Xₛ* forme un angle ξ_{xy} avec l'axe optique *X* dans le plan *XY,* c'est-à-dire par rotation autour de l'axe Z, et un angle ξ_{xz} avec l'axe optique X dans le plan *XZ,* c'est-à-dire par rotation autour de l'axe *Y.*

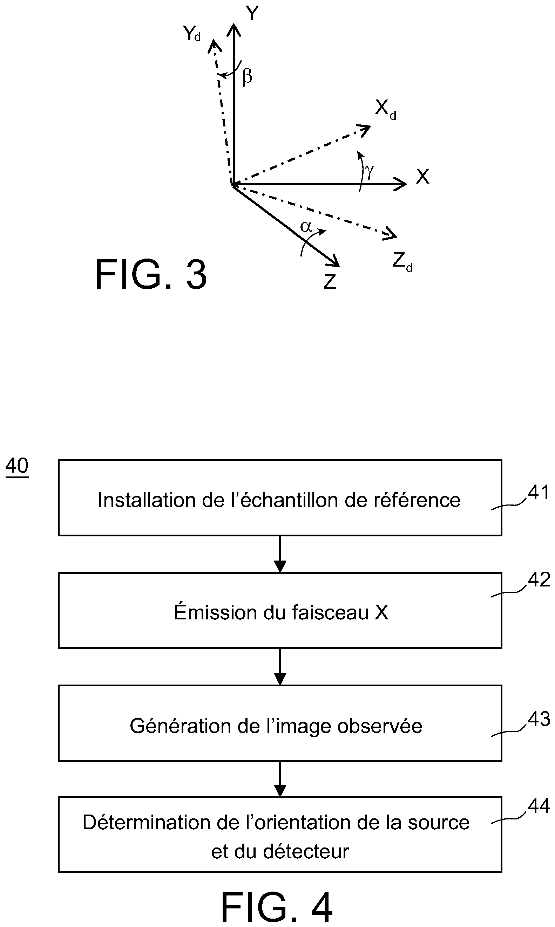

La figure 3 représente le repère orthogonal *XYZ* lié au porte-échantillon 12 et le repère orthogonal *X_{d}Y_{d}Z_{d}* lié au détecteur de rayonnement X 13. Le passage du repère *XYZ* au repère *X_{d}Y_{d}Z_{d}* s'effectue par une rotation d'axe *Z* avec un angle α, une rotation d'axe *Y* avec un angle β et une rotation d'axe *X* avec un angle γ.

La figure 1 est à nouveau considérée. Le dispositif de mesure des angles d'orientation d'un système d'imagerie X 20 comprend une unité de traitement 21, un échantillon de référence 22, un premier diaphragme 23, un deuxième diaphragme 24 et un élément obturateur 25. L'échantillon de référence 22 est formé dans un matériau monocristallin, par exemple en silicium. Il est placé sur le porte-échantillon 12 de sorte que l'un de ses plans cristallins soit parallèle au plan *YZ.* Lors de la traversée de l'échantillon de référence 22, le faisceau X polychromatique 14 est en partie diffracté et est appelé « faisceau diffracté 15 ». En effet, conformément à la loi de Bragg, les longueurs d'onde du faisceau X 14 qui se trouvent en condition de Bragg avec des plans cristallins de l'échantillon de référence 22, génèrent des interférences constructives et destructives, de sorte que le faisceau X est diffracté. La forme et la position du faisceau diffracté 15 dépendent de l'orientation de la source de rayonnement X 11 et de l'orientation de l'échantillon de référence 22. Dans la mesure où le porte-échantillon 12 et l'échantillon de référence 22 sont utilisés par convention pour définir le repère de référence, la forme et la position du faisceau diffracté 15 dépendent en pratique des angles ξ_{xy} et ξ_{xz}. La projection du faisceau diffracté 15 sur la surface sensible 131 du détecteur 13 forme une figure de diffraction composée de taches. La forme et la position des taches de la figure de diffraction dépendent donc de l'orientation de la source 11, mais aussi de l'orientation du détecteur 13, c'est-à-dire des angles α, β et γ. Le détecteur 13 est agencé pour générer une image comprenant la figure de diffraction ainsi formée sur sa surface sensible 131. Cette image est appelée « image observée ».

L'unité de traitement 21 est agencée pour synchroniser la source 11 et le détecteur 13. En particulier, elle est agencée pour faire émettre le faisceau X 14 par la source 11 et générer l'image observée à l'aide du détecteur 13. L'unité de traitement 21 est en outre agencée pour déterminer, par un traitement d'image appliqué sur l'image observée, l'orientation de la source 11 et celle du détecteur 13. Le traitement d'image peut comporter une première étape dans laquelle la position des centroïdes des taches de diffraction est déterminée. Des approches de segmentation combinées avec des calculs de centre de masse peuvent être utilisées, tout comme des techniques d'apprentissage profond utilisant des réseaux des neurones pour distinguer les taches de diffraction dans des images. L'orientation de la source 11 et celle du détecteur 13 est ensuite déterminée dans une deuxième étape par comparaison des positions des centroïdes des taches de diffraction dans l'image observée avec les positions des centroïdes des taches de diffraction dans au moins une image de référence, appelée « image cible ». Ladite image cible comporte une figure de diffraction obtenue pour l'échantillon de référence 22 avec une orientation prédéterminée (connue) de la source 11 et une orientation prédéterminée (connue) du détecteur 13. L'image cible comporte par exemple une figure de diffraction obtenue avec une source 11 et un détecteur 13 parfaitement alignés avec l'échantillon de référence 22, c'est-à-dire avec un axe principal de propagation *Xₛ* parallèle à l'axe optique *X* et un repère *X_{d}Y_{d}Z_{d}* confondu avec le repère *XYZ.* La détermination de l'orientation de la source 11 et de celle du détecteur 13 est décrite plus précisément ci-dessous, en référence à la figure 4.

Le premier diaphragme 23 est placé en amont du porte-échantillon 12, par exemple au plus près du porte-échantillon 12. Il est agencé pour limiter une surface transversale du faisceau X 14 dans le plan *XY.* Cette limitation de surface permet d'assurer que l'ensemble du faisceau X atteignant le détecteur 13 ait effectivement traversé l'échantillon de référence 22. Le premier diaphragme 23 comporte par exemple une ouverture dont les dimensions dans le plan YZ sont inférieures aux dimensions correspondantes de l'échantillon de référence 22.

Le deuxième diaphragme 24 est placé entre la source 11 et le premier diaphragme 23. Il est par exemple placé au plus près de la source 11. Il est agencé pour obtenir un faisceau X collimaté au niveau du porte-échantillon 12. Le deuxième diaphragme 24 présente essentiellement un intérêt lorsque la distance entre la source 11 et le détecteur 13 est supérieure ou égale à 30 cm. Ce diaphragme 24 peut avantageusement être remplacé par un collimateur positionné de sorte que son foyer soit situé au centre de la source 11.

L'élément obturateur 25 est placé en aval du porte-échantillon 12. Il est par exemple placé au plus près du détecteur 13. L'élément obturateur 25 est agencé pour empêcher une partie du faisceau X 14 ayant traversé l'échantillon de référence 22 sans subir de diffraction, d'atteindre la surface sensible 131 du détecteur 13. Cette partie du faisceau X 14, si elle n'était pas bloquée, formerait une tache centrale d'intensité relativement importante sur le détecteur 13. Cette tache centrale impliquerait un bruit électronique relativement important et donc une moins bonne résolution de la mesure d'intensité de l'image observée. L'élément obturateur 25 est formé dans un matériau opaque aux rayons X, par exemple en plomb. Lorsque le faisceau X 14 est collimaté, les dimensions de l'élément obturateur 25 peuvent être égales ou légèrement supérieures aux dimensions correspondantes de l'ouverture du premier diaphragme 23.

Le premier diaphragme 23, le deuxième diaphragme 24 (ou le collimateur) et l'élément obturateur 25 peuvent former un ensemble monobloc. L'échantillon de référence 22 peut également être solidaire de ces éléments optiques.

La figure 4 représente un exemple de procédé de mesure des angles d'orientation du système d'imagerie X 10 représenté sur la figure 1. Le procédé 40 comprend une étape 41 d'installation de l'échantillon de référence 22, une étape 42 d'émission du faisceau X 14, une étape 43 de génération de l'image observée et une étape 44 de détermination de l'orientation de la source et du détecteur. Au cours de l'étape 41, l'échantillon de référence 22 est installé sur le porte-échantillon 12 de sorte que l'un de ses plans cristallins soit parallèle au plan YZ. La source de rayonnement 11 peut alors être commandée par l'unité de traitement 21 dans l'étape 42 afin d'émettre le faisceau X polychromatique 14 selon l'axe principal de propagation *Xₛ*. Parallèlement, l'unité de traitement 21 peut commander le détecteur de rayonnement X 13 dans l'étape 43 afin qu'il génère l'image observée, ladite image comprenant la figure de diffraction engendrée par l'échantillon de référence 22. Enfin, au cours de l'étape 44, l'unité de traitement 21 détermine l'orientation de l'axe principal de propagation *Xₛ*, définie par les angles ξ_{xy} et ξ_{xz}, ainsi que l'orientation de la surface sensible 131 du détecteur de rayonnement X 13, définie par les angles α, β et γ. Comme indiqué précédemment, ces orientations sont déterminées par comparaison de l'image observée avec au moins une image cible comportant une figure de diffraction obtenue pour l'échantillon de référence avec une orientation prédéterminée de l'axe principal de propagation *Xₛ* de la source 11 et une orientation prédéterminée de la surface sensible 131 du détecteur de rayonnement X 13.

Selon une première forme de réalisation, la détermination de l'orientation de la source 11 et du détecteur 13 comprend une première étape de détermination de la position des centroïdes des taches de la figure de diffraction dans l'image observée et une deuxième étape de comparaison de l'image observée avec un ensemble prédéterminé d'images cibles. Chaque image cible représente une figure de diffraction obtenue avec l'échantillon de référence 22 pour une orientation prédéterminée de l'axe principal de propagation *Xₛ* et pour une orientation prédéterminée de la surface sensible 131. Les orientations sont distinctes pour chaque image cible, de sorte à ce que l'ensemble des images cibles fournisse un échantillon représentatif des figures de diffraction susceptibles d'être obtenues avec le système d'imagerie X 10. La comparaison de l'image observée avec une image cible consiste par exemple à déterminer une moyenne des distances entre le centroïde de chaque tache dans l'image observée et le centroïde de chaque tache correspondante dans l'image cible. Les angles ξ_{xy} et ξ_{xz}, ainsi que les angles α, β et γ sont alors déterminés comme étant ceux associés à l'image cible pour laquelle la moyenne des distances est la plus faible. Cette image cible présente la figure de diffraction qui correspond le mieux à la figure de diffraction de l'image observée.

Les différentes images cibles peuvent être obtenues par une modélisation numérique de la diffraction générée par l'échantillon de référence 22 installé sur le porte-échantillon 12, pour une orientation prédéterminée de l'axe principal de propagation *Xₛ* (angles ξ_{xy} et ξ_{xz}) et une orientation prédéterminée de la surface sensible 131 du détecteur 13 (angles α, β et γ). Cette modélisation numérique est par exemple réalisée à l'aide d'un logiciel de modélisation de la diffraction de Laue tel que le logiciel PyMicro. Alternativement, les images cibles peuvent être générées à l'aide d'un système d'imagerie X étalonné et dont les orientations de la source et du détecteur sont précisément contrôlées et mesurées. La position des centroïdes des taches de la figure de diffraction dans chaque image cible peut être déterminée comme celle des centroïdes des taches de la figure de diffraction dans l'image observée.

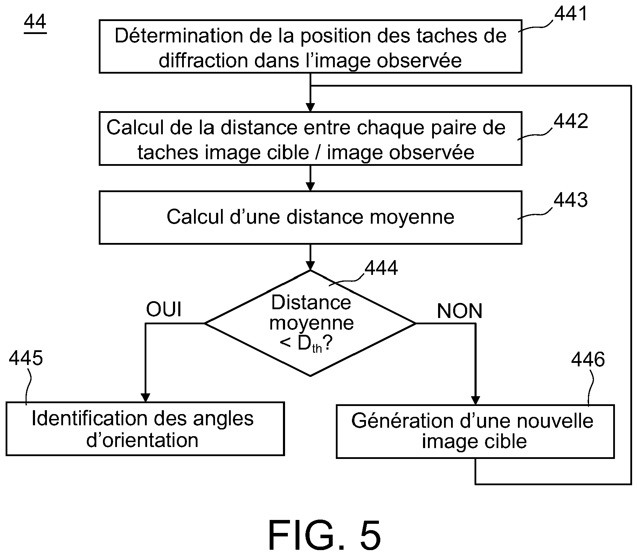

La figure 5 représente une deuxième forme de réalisation de l'étape 44 de détermination de l'orientation de l'axe principal de propagation *Xₛ* et de la surface sensible 131 du détecteur de rayonnement X 13. Dans cette forme de réalisation, un processus itératif est appliqué à partir d'une image cible initiale. Plus précisément, dans une première sous-étape 441, la position des centroïdes des taches de diffraction dans l'image observée est déterminée, de manière analogue à la première forme de réalisation. Dans une deuxième sous-étape 442, une distance entre le centroïde de chaque tache de la figure de diffraction dans l'image observée et le centroïde de la tache correspondante dans l'image cible considérée - à savoir l'image cible initiale lors de la première occurrence de la sous-étape 442 - est calculée. Dans une troisième sous-étape 443, une distance moyenne est calculée, la distance moyenne étant une moyenne des distances entre les différentes taches dans l'image observée et les taches correspondantes dans l'image cible considérée. Dans une quatrième sous-étape 444, la distance moyenne est comparée à une distance seuil Dₜₕ. La distance seuil Dₜₕ est déterminée en fonction de la précision souhaitée pour la mesure des angles ξ_{xy}, ξ_{xz}, α, β et γ. Si la distance moyenne est inférieure à la distance seuil Dₜₕ, les angles ξ_{xy}, ξ_{xz}, α, β et γ associés à l'image cible considérée sont identifiés, dans une sous-étape 445, comme étant ceux définissant l'orientation de la source 11 et du détecteur 13. En revanche, si au cours de la sous-étape 444, il est déterminé que la distance moyenne est supérieure ou égale à la distance seuil Dₜₕ, une nouvelle image cible est générée dans une sous-étape 446 et les sous-étapes 442, 443 et 444 sont réitérées avec cette nouvelle image cible. La nouvelle image cible est générée avec une orientation de l'axe principal de propagation de la source 11 distincte de l'orientation de l'image cible courante et/ou avec une orientation de la surface sensible 131 du détecteur 13 distincte de l'orientation de l'image cible courante. De préférence, les angles ξ_{xy}, ξ_{xz}, α, β et γ sont choisis de manière à générer une nouvelle image cible distincte de toutes les images cibles précédentes. Par ailleurs, les angles ξ_{xy}, ξ_{xz}, α, β et γ peuvent être choisis en fonction de la distance moyenne calculée pour l'image cible courante ou des différentes distances moyennes calculées pour les images cibles précédentes.

Il est à noter que, dans la description ci-dessus, il a été considéré que l'échantillon de référence 22 était aligné avec le repère de référence *XYZ,* et notamment avec l'axe optique X du système d'imagerie X 10. Néanmoins, l'invention est également applicable lorsque cette condition n'est pas remplie. Des angles supplémentaires définissant l'orientation de l'échantillon de référence nécessitent alors d'être déterminés. Pour la forme de réalisation impliquant une comparaison avec les figures de diffraction d'un ensemble d'images cibles, cela implique de disposer d'une bibliothèque d'images plus importante, prenant comme degrés de liberté supplémentaires le ou les angles définissant l'orientation de l'échantillon de référence 22.

D'autre part, dans les deux formes de réalisation de l'étape 44 de détermination de l'orientation de la source de rayonnement X 11 et de l'orientation du détecteur de rayonnement X 13, il a été considéré que l'image observée était comparée à une image cible sur la base de la position des centroïdes des taches de leur figure de diffraction. Néanmoins, à la place des centroïdes, il est possible de prendre en compte un autre point des taches de diffraction. En outre, la comparaison de l'image observée à une image cible peut prendre en compte d'autres propriétés des figures de diffraction, telles que la forme des taches.

## Revendications

1. Procédé de mesure des angles d'orientation d'un système d'imagerie X, le système d'imagerie X (10) comprenant une source de rayonnement X (11), un détecteur de rayonnement X (13) et un porte-échantillon (12) agencé pour recevoir un échantillon à analyser, le système d'imagerie X (10) étant agencé de sorte que la source de rayonnement X (11) puisse émettre un faisceau X polychromatique (14) selon un axe principal de propagation (*Xₛ*) passant par l'échantillon à analyser et atteignant une surface sensible (131) du détecteur de rayonnement X (13), un axe optique (X) du système d'imagerie X étant défini entre un centre de la source de rayonnement X (11) et le détecteur de rayonnement X (13),
le procédé (40) comprenant les étapes de :
▪ émettre (42), depuis la source de rayonnement X, un faisceau X polychromatique (14) selon l'axe principal de propagation (*Xₛ*), de sorte que le faisceau X traverse un échantillon de référence (22) installé sur le porte-échantillon (12) et forme une figure de diffraction sur la surface sensible (131) du détecteur de rayonnement X (13),
▪ générer (43), avec le détecteur de rayonnement X (13), une image observée, l'image observée comprenant la figure de diffraction, et
▪ déterminer (44) l'orientation (ξxy, ξxz) de l'axe principal de propagation (Xs) et l'orientation (α, β, γ) de la surface sensible (131) du détecteur de rayonnement X (13) par comparaison de l'image observée avec au moins une image cible, l'image cible comportant une figure de diffraction obtenue pour l'échantillon de référence (22) avec une orientation prédéterminée de l'axe principal de propagation et une orientation prédéterminée de la surface sensible du détecteur de rayonnement X.

2. Procédé selon la revendication 1, dans lequel l'étape (44) de déterminer l'orientation (ξ_{xy}, ξ_{xz}) de l'axe principal de propagation (*Xₛ*) et l'orientation (α, β, γ) de la surface sensible (131) du détecteur de rayonnement X (13) comprend une comparaison de l'image observée avec un ensemble d'images cibles, chaque image cible représentant une figure de diffraction pour une orientation prédéterminée de l'axe principal de propagation (*Xₛ*) et une orientation prédéterminée de la surface sensible (131) du détecteur de rayonnement X (13), lesdites orientations étant distinctes pour chaque image cible.

3. Procédé selon la revendication 1, dans lequel l'étape (44) de déterminer l'orientation (ξ_{xy}, ξ_{xz}) de l'axe principal de propagation (*Xₛ*) et l'orientation (α, β, γ) de la surface sensible (131) du détecteur de rayonnement X (13) comprend les sous-étapes de :
▪ déterminer (443) un paramètre de similitude représentatif d'un degré de similitude entre la figure de diffraction de l'image observée et la figure de diffraction d'une image cible courante pour une orientation donnée de l'axe principal de propagation (Xs) et une orientation donnée de la surface sensible (131) du détecteur de rayonnement X (13),
▪ comparer (444) le paramètre de similitude avec un seuil de similitude,
▪ lorsque le paramètre de similitude est inférieur au seuil de similitude, identifier (445) l'orientation donnée de l'axe principal de propagation (*Xₛ*) et l'orientation donnée de la surface sensible (131) du détecteur de rayonnement X (13) comme orientations effectives de l'axe principal de propagation (*Xₛ*) et de la surface sensible (131) du détecteur de rayonnement X (13), et
▪ lorsque le paramètre de similitude est supérieur ou égal au seuil de similitude, générer (446) une nouvelle image cible courante, au moins l'une des orientations données pour l'image cible courante étant distincte de l'orientation donnée correspondante pour l'image cible précédente, et réitérer les sous-étapes précédentes jusqu'à ce que le paramètre de similitude soit inférieur au seuil de similitude.

4. Procédé selon l'une des revendications 2 et 3, dans lequel chaque image cible est déterminée par une modélisation numérique de la diffraction générée par l'échantillon de référence (22) installé sur le porte-échantillon (12), pour une orientation donnée de l'axe principal de propagation (*Xₛ*) et une orientation donnée de la surface sensible (131) du détecteur de rayonnement X (13).

5. Procédé selon l'une des revendications 1 à 4 comprenant, en outre, préalablement à l'étape (42) d'émission du faisceau X, une étape (41) d'installation de l'échantillon de référence (22) sur le porte-échantillon (12).

6. Dispositif de mesure des angles d'orientation d'un système d'imagerie X, le système d'imagerie X (10) comprenant une source de rayonnement X (11), un détecteur de rayonnement X (13) et un porte-échantillon (12) agencé pour recevoir un échantillon à analyser, le système d'imagerie X (10) étant agencé de sorte que la source de rayonnement X (11) puisse émettre un faisceau X polychromatique (14) selon un axe principal de propagation (*Xₛ*) passant par l'échantillon à analyser et atteignant une surface sensible (131) du détecteur de rayonnement X (13), un axe optique (X)du système d'imagerie X étant défini entre un centre de la source de rayonnement X (11) et le détecteur de rayonnement X (13),
le dispositif (20) comprenant une unité de traitement (21) configurée pour :
▪ faire émettre, par la source de rayonnement X (11), un faisceau X polychromatique (14) selon l'axe principal de propagation (*Xₛ*), de sorte que le faisceau X traverse un échantillon de référence (22) installé sur le porte-échantillon (12) et forme une figure de diffraction sur la surface sensible (131) du détecteur de rayonnement X (13),
▪ générer, avec le détecteur de rayonnement X (13), une image observée, l'image observée comprenant la figure de diffraction, et
▪ déterminer l'orientation (ξ_{xy}, ξ_{xz}) de l'axe principal de propagation (*Xₛ*) et l'orientation (α, β, γ) de la surface sensible (131) du détecteur de rayonnement X (13) par comparaison de l'image observée avec au moins une image cible, l'image cible comportant une figure de diffraction obtenue pour l'échantillon de référence (22) avec une orientation prédéterminée de l'axe principal de propagation et une orientation prédéterminée de la surface sensible du détecteur de rayonnement X.

7. Dispositif selon la revendication 6 comprenant, en outre, un premier diaphragme (23) placé en amont du porte-échantillon (12), et agencé pour limiter une surface transversale du faisceau X (14).

8. Dispositif selon la revendication 7, dans lequel le premier diaphragme (23) comporte une ouverture dont une surface transversale est inférieure à une surface transversale de l'échantillon de référence (22).

9. Dispositif selon l'une des revendications 7 et 8 comprenant, en outre, un deuxième diaphragme (24) et/ou un collimateur placé entre la source de rayonnement X (1) et le premier diaphragme (23), agencé pour obtenir un faisceau X collimaté au niveau du porte-échantillon (12).

10. Dispositif selon l'une des revendications 6 à 9 comprenant, en outre, un élément obturateur (25) placé en aval du porte-échantillon (12), et agencé pour empêcher une partie du faisceau X ayant traversé l'échantillon de référence sans être diffracté, d'atteindre la surface sensible (131) du détecteur de rayonnement X (13).

11. Dispositif selon l'une des revendications 6 à 10 comprenant, en outre, l'échantillon de référence (22).

12. Procédé selon l'une des revendications 1 à 5 ou dispositif selon l'une des revendications 6 à 11, dans lequel l'échantillon de référence (22) est formé de silicium.

13. Programme d'ordinateur comprenant des instructions qui, lorsque le programme est exécuté par une unité de traitement comprise par un dispositif selon l'une des revendications 6 à 11, conduisent celui-ci à mettre en oeuvre le procédé selon l'une des revendications 1 à 4.

## Patentansprüche

1. Verfahren zum Messen von Ausrichtungswinkeln eines Röntgen-Abbildungssystems, wobei das Röntgen-Abbildungssystem (10) eine Röntgenstrahlungsquelle (11), einen Röntgenstrahlungsdetektor (13) und einen Probenhalter (12) umfasst, der angeordnet ist, um eine zu analysierende Probe aufzunehmen, wobei das Röntgen-Abbildungssystem (10) so angeordnet ist, dass die Röntgenstrahlungsquelle (11) einen polychromatischen Röntgenstrahl (14) entlang einer Hauptausbreitungsachse (*Xₛ*) emittieren kann, die durch die zu analysierende Probe verläuft und eine empfindliche Oberfläche (131) des Röntgenstrahlungsdetektors (13) erreicht, wobei eine optische Achse (X) des Röntgen-Abbildungssystems zwischen einem Zentrum der Röntgenstrahlungsquelle (11) und dem Röntgenstrahlungsdetektor (13) definiert wird,
wobei das Verfahren (40) die Schritte umfasst zum:
- Emittieren (42), ausgehend von der Röntgenstrahlungsquelle, eines polychromatischen Röntgenstrahls (14) entlang der Hauptausbreitungsachse (*Xₛ*), so dass der Röntgenstrahl eine Referenzprobe (22) durchdringt, die im Probenhalter (12) installiert ist, und ein Beugungsmuster auf der empfindlichen Oberfläche (131) des Röntgenstrahlungsdetektors (13) bildet,
- Erzeugen (43), mit dem Röntgenstrahlungsdetektor (13), eines betrachteten Bildes, wobei das betrachtete Bild das Beugungsmuster umfasst, und
- Bestimmen (44) der Ausrichtung (ξ_{xy}, ξ_{xz}) der Hauptausbreitungsachse (*Xₛ*) und der Ausrichtung (α, β, γ) der empfindlichen Oberfläche (131) des Röntgenstrahlungsdetektors (13) durch Vergleich des betrachteten Bildes mit mindestens einem Zielbild, wobei das Zielbild ein Beugungsmuster beinhaltet, das für die Referenzprobe (22) erhalten wurde mit einer vorbestimmten Ausrichtung der Hauptausbreitungsachse und einer vorbestimmten Ausrichtung der empfindlichen Oberfläche des Röntgenstrahlungsdetektors.

2. Verfahren nach Anspruch 1, wobei der Schritt (44) zur Bestimmung der Ausrichtung (ξ_{xy}, ξ_{xz}) der Hauptausbreitungsachse (*Xₛ*) und der Ausrichtung (α, β, γ) der empfindlichen Oberfläche (131) des Röntgenstrahlungsdetektors (13) einen Vergleich des betrachteten Bildes mit einem Satz von Zielbildern umfasst, wobei jedes Zielbild ein Beugungsmuster für eine vorbestimmte Ausrichtung der Hauptausbreitungsachse (*Xₛ*) und eine vorbestimmte Ausrichtung der empfindlichen Oberfläche (131) des Röntgenstrahlungsdetektors (13) repräsentiert, wobei die Ausrichtungen für jedes Zielbild unterschiedlich sind.

3. Verfahren nach Anspruch 1, wobei der Schritt (44) zur Bestimmung der Ausrichtung (ξ_{xy}, ξ_{xz}) der Hauptausbreitungsachse (*Xₛ*) und der Ausrichtung (α, β, γ) der empfindlichen Oberfläche (131) des Röntgenstrahlungsdetektors (13), die Teilschritte umfasst zum:
- Bestimmen (443) eines Ähnlichkeitsparameters, der repräsentativ ist für einen Ähnlichkeitsgrad zwischen dem Beugungsmuster des betrachteten Bildes und dem Beugungsmuster eines aktuellen Zielbildes für eine gegebene Ausrichtung der Hauptausbreitungsachse (*Xₛ*) und eine gegebene Ausrichtung der empfindlichen Oberfläche (131) des Röntgenstrahlungsdetektors (13),
- Vergleichen (444) des Ähnlichkeitsparameters mit einem Ähnlichkeitsschwellenwert,
- wenn der Ähnlichkeitsparameter kleiner ist als der Ähnlichkeitsschwellenwert, Identifizieren (445) der gegebenen Ausrichtung der Hauptausbreitungsachse (*Xₛ*) und der gegebenen Ausrichtung der empfindlichen Oberfläche (131) des Röntgenstrahlungsdetektors (13) als effektive Ausrichtung der Hauptausbreitungsachse (*Xₛ*) und der empfindlichen Oberfläche (131) des Röntgenstrahlungsdetektors (13), und
- wenn der Ähnlichkeitsparameter größer oder gleich dem Ähnlichkeitsschwellenwert ist, Erzeugen (446) eines neuen aktuellen Zielbildes, wobei sich mindestens eine der gegebenen Ausrichtungen für das aktuelle Zielbild von der entsprechenden gegebenen Ausrichtung für das vorhergehende Zielbild unterscheidet, und Wiederholen der vorhergehenden Teilschritte, bis der Ähnlichkeitsparameter kleiner als der Ähnlichkeitsschwellenwert ist.

4. Verfahren nach einem der Ansprüche 2 und 3, wobei jedes Zielbild durch eine numerische Modellierung der Beugung bestimmt wird, die von der Referenzprobe (22) erzeugt wird, die im Probenhalter (12) installiert ist, für eine gegebene Ausrichtung der Hauptausbreitungsachse (*Xₛ*) und eine gegebene Ausrichtung der empfindlichen Oberfläche (131) des Röntgenstrahlungsdetektors (13).

5. Verfahren nach einem der Ansprüche 1 bis 4, ferner umfassend, vor dem Schritt (42) der Emission des Röntgenstrahls, einen Schritt (41) zur Installierung der Referenzprobe (22) im Probenhalter (12).

6. Vorrichtung zum Messen von Ausrichtungswinkeln eines Röntgen-Abbildungssystems, wobei das Röntgen-Abbildungssystem (10) eine Röntgenstrahlungsquelle (11), einen Röntgenstrahlungsdetektor (13) und einen Probenhalter (12) umfasst, der angeordnet ist, um eine zu analysierende Probe aufzunehmen, wobei das Röntgen-Abbildungssystem (10) so angeordnet ist, dass die Röntgenstrahlungsquelle (11) einen polychromatischen Röntgenstrahl (14) entlang einer Hauptausbreitungsachse (*Xₛ*) emittieren kann, die durch die zu analysierende Probe verläuft und eine empfindliche Oberfläche (131) des Röntgenstrahlungsdetektors (13) erreicht, wobei eine optische Achse (X) des Röntgen-Abbildungssystems zwischen einem Zentrum der Röntgenstrahlungsquelle (11) und dem Röntgenstrahlungsdetektor (13) definiert wird,
wobei die Vorrichtung (20) eine Verarbeitungseinheit (21) umfasst, die konfiguriert ist zum:
- Emittieren lassen, durch die Röntgenstrahlungsquelle (11), eines polychromatischen Röntgenstrahls (14) entlang der Hauptausbreitungsachse (*Xₛ*), so dass der Röntgenstrahl eine Referenzprobe (22) durchdringt, die im Probenhalter (12) installiert ist, und ein Beugungsmuster auf der empfindlichen Oberfläche (131) des Röntgenstrahlungsdetektors (13) bildet,
- Erzeugen, mit dem Röntgenstrahlungsdetektor (13), eines betrachteten Bildes, wobei das betrachtete Bild das Beugungsmuster umfasst, und
- Bestimmen der Ausrichtung (ξ_{xy}, ξ_{xz}) der Hauptausbreitungsachse (*Xₛ*) und der Ausrichtung (α, β, γ) der empfindlichen Oberfläche (131) des Röntgenstrahlungsdetektors (13) durch Vergleich des betrachteten Bildes mit mindestens einem Zielbild, wobei das Zielbild ein Beugungsmuster beinhaltet, das für die Referenzprobe (22) erhalten wurde, mit einer vorbestimmten Ausrichtung der Hauptausbreitungsachse und einer vorbestimmten Ausrichtung der empfindlichen Oberfläche des Röntgenstrahlungsdetektors.

7. Vorrichtung nach Anspruch 6, ferner eine erste Membran (23) umfassend, die stromaufwärts des Probenhalters (12) angebracht ist und angeordnet ist, um eine transversale Oberfläche des Röntgenstrahls (14) zu begrenzen.

8. Vorrichtung nach Anspruch 7, wobei die erste Membran (23) eine Öffnung beinhaltet, deren transversale Oberfläche kleiner ist als eine transversale Oberfläche der Referenzprobe (22).

9. Vorrichtung nach einem der Ansprüche 7 und 8, ferner eine zweite Membran (24) umfassend und/oder einen Kollimator, der zwischen der Röntgenstrahlungsquelle (1) und der ersten Membran (23) angebracht ist und angeordnet ist, um einen kollimierten Röntgenstrahl im Bereich des Probenhalters (12) zu erhalten.

10. Vorrichtung nach einem der Ansprüche 6 bis 9, ferner ein Verschlusselement (25) umfassend, das stromabwärts des Probenhalters (12) angebracht ist und angeordnet ist, um zu verhindern, dass ein Teil des Röntgenstrahls, der die Referenzprobe ohne Beugung durchdrungen hat, die empfindliche Oberfläche (131) des Röntgenstrahlungsdetektors (13) erreicht.

11. Vorrichtung nach einem der Ansprüche 6 bis 10, ferner die Referenzprobe (22) umfassend.

12. Verfahren nach einem der Ansprüche 1 bis 5 oder Vorrichtung nach einem der Ansprüche 6 bis 11, wobei die Referenzprobe (22) aus Silizium gebildet ist.

13. Computerprogramm, Anweisungen umfassend, die, wenn das Programm von einer Verarbeitungseinheit ausgeführt wird, die von einer Vorrichtung nach einem der Ansprüche 6 bis 11 inkludiert ist, diese veranlassen, das Verfahren nach einem der Ansprüche 1 bis 4 durchzuführen.

## Claims

1. Method for measuring angles of orientation of an x-ray imaging system, the x-ray imaging system (10) comprising an x-ray source (11), an x-ray detector (13) and a sample holder (12) arranged to receive a sample to be analysed, the x-ray imaging system (10) being arranged so that the x-ray source (11) can emit a polychromatic x-ray beam (14) along a main axis of propagation (*Xₛ*) passing through the sample to be analysed and reaching a sensing area (131) of the x-ray detector (13), an optical axis (*X*) of the x-ray imaging system being defined between a centre of the x-ray source (11) and the x-ray detector (13),
the method (40) comprising the steps of:
▪ emitting (42), from the x-ray source, a polychromatic x-ray beam (14) along the main axis of propagation (*Xₛ*), so that the x-ray beam passes through a reference sample (22) installed on the sample holder (12) and forms a diffraction pattern on the sensing area (131) of the x-ray detector (13),
▪ generating (43), with the x-ray detector (13), an observed image, the observed image comprising the diffraction pattern, and
▪ determining (44) the orientation (^xy, ^xz) of the main axis of propagation (Xs) and the orientation (α, β, γ) of the sensing area (131) of the x-ray detector (13) by comparing the observed image with at least one target image, the target image including a diffraction pattern obtained for the reference sample (22) with a preset orientation of the main axis of propagation and a preset orientation of the sensing area of the x-ray detector.

2. Method according to claim 1, wherein the step (44) of determining the orientation (ξ_{xy}, ξ_{xz}) of the main axis of propagation (*Xₛ*) and the orientation (α, β, γ) of the sensing area (131) of the x-ray detector (13) comprises comparing the observed image with a set of target images, each target image showing a diffraction pattern for a preset orientation of the main axis of propagation (*Xₛ*) and a preset orientation of the sensing area (131) of the x-ray detector (13), said orientations being different for each target image.

3. Method according to claim 1, wherein the step (44) of determining the orientation (ξ_{xy}, ξ_{xz}) of the main axis of propagation (*Xₛ*) and the orientation (α, β, γ) of the sensing area (131) of the x-ray detector (13) comprises the substeps of:
▪ determining (443) a similarity parameter representative of a degree of similarity between the diffraction pattern of the observed image and the diffraction pattern of a current target image for a given orientation of the main axis of propagation (Xs) and a given orientation of the sensing area (131) of the x-ray detector (13),
▪ comparing (444) the similarity parameter with a similarity threshold,
▪ when the similarity parameter is less than the similarity threshold, identifying (445) the given orientation of the main axis of propagation (*Xₛ*) and the given orientation of the sensing area (131) of the x-ray detector (13) as effective orientations of the main axis of propagation (*Xₛ*) and of the sensing area (131) of the x-ray detector (13), and
▪ when the similarity parameter is greater than or equal to the similarity threshold, generating (446) a new current target image, at least one of the given orientations for the current target image being different from the corresponding given orientation for the preceding target image, and reiterating the preceding substeps until the similarity parameter is less than the similarity threshold.

4. Method according to one of claims 2 and 3, wherein each target image is determined by a digital modelling of the diffraction generated by the reference sample (22) installed on the sample holder (12), for a given orientation of the main axis of propagation (*Xₛ*) and a given orientation of the sensing area (131) of the x-ray detector (13).

5. Method according to one of claims 1 to 4 further comprising prior to the step (42) of emitting the x-ray beam, a step (41) of installing the reference sample (22) on the sample holder (12).

6. Device for measuring angles of orientation of an x-ray imaging system, the x-ray imaging system (10) comprising an x-ray source (11), an x-ray detector (13) and a sample holder (12) arranged to receive a sample to be analysed, the x-ray imaging system (10) being arranged so that the x-ray source (11) can emit a polychromatic x-ray beam (14) along a main axis of propagation (*Xₛ*) passing through the sample to be analysed and reaching a sensing area (131) of the x-ray detector (13), an optical axis (*X*) of the x-ray imaging system being defined between a centre of the x-ray source (11) and the x-ray detector (13),
the device (20) comprising a processing unit (21) configured to:
▪ emit, by the x-ray source (11), a polychromatic x-ray beam (14) along the main axis of propagation (*Xₛ*), so that the x-ray beam passes through a reference sample (22) installed on the sample holder (12) and forms a diffraction pattern on the sensing area (131) of the x-ray detector (13),
▪ generate, with the x-ray detector (13), an observed image, the observed image comprising the diffraction pattern, and
▪ determine the orientation (ξ_{xy}, ξ_{xz}) of the main axis of propagation (*Xₛ*) and the orientation (α, β, γ) of the sensing area (131) of the x-ray detector (13) by comparing the observed image with at least one target image, the target image including a diffraction pattern obtained for the reference sample (22) with a preset orientation of the main axis of propagation and a preset orientation of the sensing area of the x-ray detector.

7. Device according to claim 6 further comprising a first diaphragm (23) placed upstream of the sample holder (12), and arranged to limit a transverse area of the x-ray beam (14).

8. Device according to claim 7, wherein the first diaphragm (23) includes an opening a transverse area of which is smaller than a transverse area of the reference sample (22).

9. Device according to one of claims 7 and 8 further comprising a second diaphragm (24) and/or a collimator placed between the x-ray source (1) and the first diaphragm (23), arranged to obtain a collimated x-ray beam at the sample holder (12).

10. Device according to one of claims 6 to 9 further comprising a shutter element (25) placed downstream of the sample holder (12), and arranged to prevent a portion of the x-ray beam having passed through the reference sample without being diffracted, from reaching the sensing area (131) of the x-ray detector (13).

11. Device according to one of claims 6 to 10 further comprising the reference sample (22).

12. Method according to one of claims 1 to 5 or device according to one of claims 6 to 11, wherein the reference sample (22) is made of silicon.

13. Computer program comprising instructions that, when the program is executed by a processing unit comprised by a device according to one of claims 6 to 11, lead it to implement the method according to claims 1 to 4.
